# FASCICULE DE BREVET EUROPEEN

(11) **EP 2 132 062 B1**
(45) Date de publication et mention de la délivrance du brevet: **19.12.2012**
(21) Numéro de dépôt: 08762163.7
(22) Date de dépôt: 27.02.2008
(51) Int. Cl.: B60R 21/205

(54) **ASSEMBLAGE DE FIXATION D'UN MODULE DE COUSSIN DE SECURITE SUR UNE STRUCTURE MECANIQUEMENT RESISTANTE DE LA PLANCHE DE BORD**
BAUGRUPPE ZUR ANBRINGUNG EINES SICHERHEITSBEUTELMODULS AN EINER MECHANISCH RESISTENTEN STRUKTUR EINES ARMATURENBRETTS
ASSEMBLY FOR ATTACHING A SAFETY BAG MODULE ON A MECHANICALLY RESISTANT STRUCTURE OF A DASHBOARD

(30) Priorité: 06.03.2007 FR 0753657
(43) Date de publication de la demande: 16.12.2009
(73) Titulaire: Renault SAS, 92100 Boulogne Billancourt (FR)
(72) Inventeur: PRENEL, Frederic, F-78830 Bullion (FR); BOISSOUT, Jerome, F-78000 Versailles (FR)
(86) Numéro de dépôt international: PCT/FR2008/050328
(87) Numéro de publication internationale: WO 2008/113960

(56) Documents cités:
- EP-A- 1 728 691
- DE-A1- 19 809 229
- FR-A- 2 802 498
- US-A- 5 709 403

## Description

La présente invention concerne un assemblage pour la fixation d'un module de coussin de sécurité sur une structure mécaniquement résistante de la planche de bord, dans lequel un moyen de fixation comporte une première partie sur laquelle on vient lier le fond du module par serrage et une deuxième partie.

Dans les véhicules automobiles modernes, on utilise des coussins de sécurité gonflables qui peuvent se déployer en cas de chocs violents pour améliorer la sécurité des occupants à l'intérieur même de l'habitacle. Une fois déployés, ces coussins de sécurité s'interposent entre les éléments rigides de l'habitacle et les occupants.

C'est le cas, notamment, d'un coussin de sécurité disposé dans la partie supérieure de la planche de bord, côté passager avant, dont la fonction est d'éviter, en cas de choc par l'avant du véhicule, que le passager avant ne viennent heurter directement la planche de bord située en face de lui.

Un tel coussin de sécurité, invisible de l'habitacle, est généralement enfermé dans un module disposé dans un logement de la planche de bord face au passager avant, recouvert d'un volet prenant place juste sous la coiffe, ladite coiffe comportant des lignes cachées d'affaiblissement mécanique de manière à se rompre lors de l'ouverture du volet.

Les parois latérales du module s'étendent vers l'ouverture du logement et forment un canal de guidage, pour le coussin de sécurité qui se déploie sous l'effet de la mise en action de charges pyrotechniques disposées au fond du module.

Un exemple d'une telle réalisation est décrit dans le document US 5709403 11 dans lequel le module de coussin de sécurité est fixé dans la planche de bord à une structure mécaniquement résistante, comme une traverse de planche de bord. La fixation est réalisée grâce à un moyen de fixation comprenant au moins une premiere partie sur laquelle le fond du module est lié par serrage.

Cependant, les réalisations de l'art antérieur présentent un risque de pivotement du module lors de la mise en action des charges pyrotechniques car il est difficile de garantir que ces charges pyrotechniques dégagent d'une part une quantité d'énergie déterminée et d'autre part que l'énergie déployée le soit toujours selon un même axe.

Le coussin de sécurité pourrait alors heurter une arête délimitant le logement lors de son déploiement, et consécutivement percer le coussin de sécurité ou détériorer la planche de bord.

En outre, le coussin de sécurité pourrait également pivoter d'une façon que le déploiement du coussin de sécurité s'effectue vers le pare-brise ce qui pourrait le briser mais aussi limiter la surface du coussin interposée entre le passager avant et la planche de bord.

Un objet de la présente invention est de fournir un assemblage pour la fixation d'un module de coussin de sécurité sur une structure mécaniquement résistante de la planche de bord amélioré, et plus particulièrement de fournir un assemblage pour la fixation d'un module de coussin de sécurité sur une structure mécaniquement résistante de la planche de bord qui empêche son pivotement.

Selon l'invention, on propose un assemblage du type précité dans lequel la deuxième partie du moyen de fixation comporte au moins une première branche formant support pour le fond du module et au moins une deuxième branche formant support pour une paroi latérale.

Parmi les avantages procurés par la présente invention, l'assemblage proposé permet de fixer un module de coussin de sécurité dans un logement dissimulé dans la planche de bord en s'assurant que le déploiement du coussin de sécurité s'effectue sans qu'il ne rencontre d'obstacle pour se positionner effectivement entre le passager avant et la planche de bord.

On s'assure aussi que le déploiement du coussin de sécurité ne vienne pas fêler le pare-brise.

Selon d'autres caractéristiques avantageuses de l'invention qui peuvent être prises séparément ou en combinaison :
- les première et deuxième branches forment un angle compris entre 70 et 110 degrés et de préférence égal à 90 degrés ;
- au moins l'une parmi la première et la deuxième branche comporte un bossage pouvant s'insérer dans un logement complémentaire formé dans le module ;
- au moins l'une parmi la première et la deuxième branche comporte un logement adapté à recevoir un bossage complémentaire formé sur le module ;
- le fond du module est lié à la première partie du moyen de fixation par des renforts du fond du module.

On propose également un moyen de fixation pour l'utilisation dans un assemblage selon l'invention, le moyen comportant une première partie pour la liaison d'un module par serrage et une deuxième partie comportant au moins une première branche formant support pour le fond du module et au moins une deuxième branche formant support pour une paroi latérale du module.

L'invention sera désormais décrite à titre d'exemple en référence aux dessins annexés suivant :
- La figure 1 est une vue en perspective de l'assemblage pour la fixation d'un module d'airbag sur une structure rigide de la planche de bord;
- La figure 2 est une vue en coupe, de l'assemblage représenté à la figure 1 selon le plan de coupe II-II.

Dans la description qui va suivre et dans les dessins annexés, on se référera au repère usuel dans lequel, la direction X correspond à la direction longitudinale du véhicule, c'est à dire sa direction de marche, la direction Y correspond à une direction horizontale transversale perpendiculaire à la direction X, et la direction Z perpendiculaire aux deux précédentes correspond à la direction verticale.

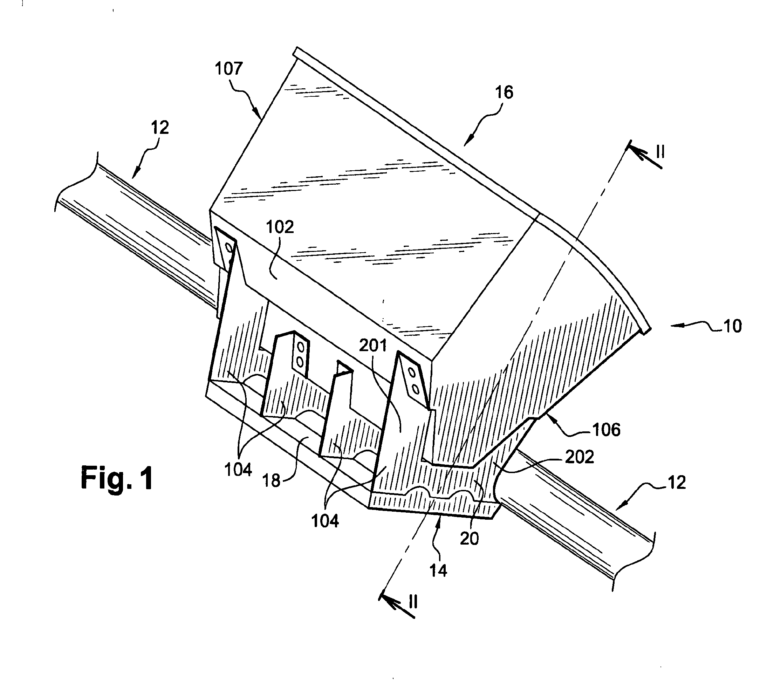

Comme représenté sur les figures et plus particulièrement à la figure 1, un module de coussin de sécurité 10 est fixé à un élément mécaniquement résistant de la planche de bord, notamment une traverse de planche de bord 12 qui s'étend selon l'axe Y par un moyen de fixation 14.

Le module de coussin de sécurité 10 comporte, à son extrémité supérieure, un volet d'obturation 16 qui vient se placer juste sous la portion de la coiffe de planche de bord face au passager avant (non représenté).

Le fond 102 du module 10 est alors accessible pour permettre notamment de connecter un câble de commande de la mise en action des charges pyrotechniques.

Selon le mode de réalisation de l'invention représenté, le module 10 présente des renforts 104 qui peuvent prendre appui sur une première partie 18 du moyen de fixation 14. Ces renforts 104 permettent de limiter la déformation du fond 102 du module 10 lors de la mise en action des charges pyrotechniques et ainsi limiter la perte d'énergie transmise au coussin de sécurité en vue de son déploiement.

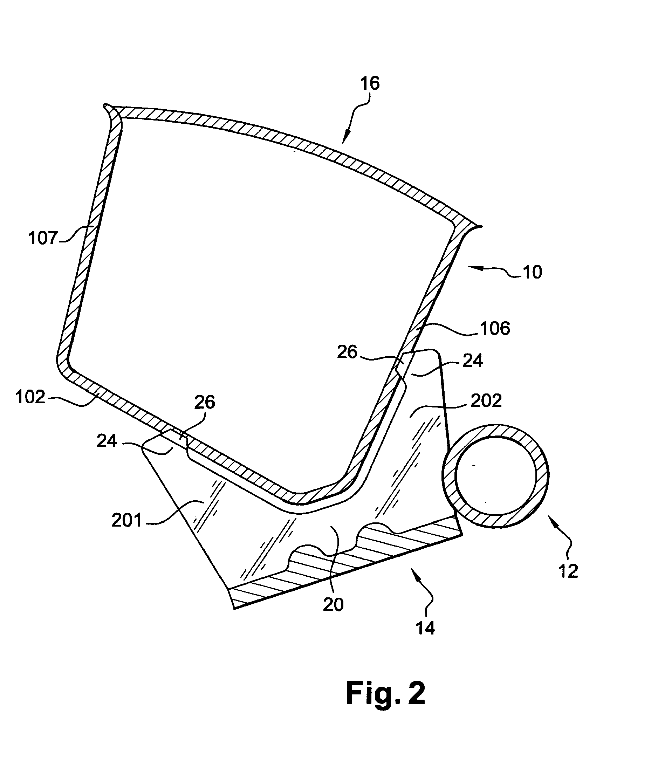

En se référant également à la figure 2, le module 10 présente des parois latérales 106, 107 qui s'étendent à partir du fond 102 jusqu'au volet d'obturation 16 et qui ont pour fonction de guider le déploiement du coussin de sécurité. Le module 10 présente alors suivant cette coupe II-II, c'est-à-dire selon un plan [X-Z] une forme sensiblement trapézoïdale, le fond 102 constituant la petite base et le volet 16 la grande base.

Le moyen de fixation 14 est liée à la traverse de planche de bord 12, constituant l'élément mécaniquement résistant, par des moyens de liaison qui peuvent être des soudures.

Selon le mode de réalisation représenté, on vient fixer le fond 102 du module 10 sur la première partie 18 du moyen de fixation 14 par des moyens de liaison, tels que des systèmes de vis-écrou et une deuxième partie 20 comprenant une première 201 et une deuxième 202 branche. De manière générale, la deuxième partie 20 du moyen de fixation 14 selon l'invention, comporte une première branche 201 formant support pour le fond 102 du module 10 et au moins une branche additionnelle 202 formant appui pour une paroi latérale 106, 107.

Les branches 201, 202 présentent une forme complémentaire du module 10 dans sa partie basse, c'est-à-dire que la première branche 201 présente une forme adaptée au fond et la deuxième branche 202 présente une forme adaptée à la paroi latérale 106, 107 qu'elle supporte.

Un tel moyen de fixation 14 permet alors de répartir les efforts dus à l'actionnement des charges pyrotechniques et ainsi limiter son pivotement autour de l'axe Y.

De préférence, ces branches 201, 202 forment un angle compris entre 70 et 110 degrés et de préférence 90 degrés de manière à réduire les efforts transmis le long de chacune des branches 201, 202.

Selon un mode de réalisation de l'invention, au moins l'une parmi la première 201 et la deuxième 202 branche comporte un bossage 24 apte à venir s'insérer dans un logement complémentaire 26 formé sur la face, 102, 106, 107 du module 10 qu'elle supporte de manière à limiter le pivotement du module 10.

Avantageusement, le positionnement et la forme de ces bossages 24 peuvent alors constituer un moyen de détrompage efficace.

Un autre avantage de ces bossage 24 est de permettre de réaliser un rattrapage de jeu entre le module 10 et le moyen de fixation 14.

Il est entendu que les bossages 24 ci avant décrits peuvent être formés sur le module 10 et les logements 26 formés sur la deuxième partie 20 du moyen de fixation 14.

Comme représenté à la figure 1, on préférera que le moyen de fixation 14 présente au moins deux paires de première 201 et de deuxième 202 branches le long du module en Y, afin de limiter d'éventuels pivotement autour de l'axe X.

## Revendications

1. Assemblage pour la fixation d'un module de coussin de sécurité (10) sur une structure mécaniquement résistante (12) de la planche de bord, ledit assemblage comprenant un module de coussin de sécurité (10) et son moyen de fixation (14), ledit moyen de fixation (14) comportant une première partie (18) sur laquelle le fond (102) d'un module (10) est lié par serrage et une deuxième partie (20) **caractérisé en ce que** la deuxième partie (20) du moyen de fixation (14) comporte au moins une première branche (201) formant support pour le fond (102) du module (10) et au moins une deuxième branche (202) formant support pour une paroi latérale (106, 107) du module (10).

2. Assemblage selon la revendication précédente **caractérisé en ce que** les première (201) et deuxième (202) branches forment un angle compris entre 70 et 110 degrés et de préférence égal à 90 degrés.

3. Assemblage selon l'une des revendications précédentes **caractérisé en ce que** au moins l'une parmi la première (201) et la deuxième (202) branche comporte un bossage (24) pouvant s'insérer dans un logement (26) complémentaire formé dans le module (10).

4. Assemblage selon l'une des revendications précédentes **caractérisé en ce que** au moins l'une parmi la première (201) et la deuxième (202) branche comporte un logement (26) adapté à recevoir un bossage (24) complémentaire formé sur le module (10).

5. Assemblage selon l'une des revendications précédentes **caractérisé en ce que** le fond (102) du module (10) est lié à la première partie (201) du moyen de fixation (14) par des renforts (104) du fond (102) du module (10).

## Claims

1. Assembly for fixing a safety bag module (10) on a mechanically resistant structure (12) of the dashboard, said assembly comprising a safety bag module (10) and its fixing means (14), said fixing means (14) comprising a first part (18) onto which the bottom (102) of a module (10) is linked by clamping and a second part (20) **characterized in that** the second part (20) of the fixing means (14) comprises at least one first branch (201) forming a support for the bottom (102) of the module (10) and at least one second branch (202) forming a support for a lateral wall (106, 107) of the module (10).

2. Assembly according to the preceding claim **characterized in that** the first (201) and second (202) branches form an angle of between 70 and 110 degrees and preferably equal to 90 degrees.

3. Assembly according to one of the preceding claims, **characterized in that** at least one out of the first (201) and the second (202) branches comprises a boss (24) that can be inserted into a complementary recess (26) formed in the module (10).

4. Assembly according to one of the preceding claims, **characterized in that** at least one out of the first (201) and the second (202) branches comprises a recess (26) suitable for receiving a complementary boss (24) formed on the module (10).

5. Assembly according to one of the preceding claims, **characterized in that** the bottom (102) of the module (10) is linked to the first part (201) of the fixing means (14) by reinforcements (104) of the bottom (102) of the module (10).

## Patentansprüche

1. Baugruppe zur Befestigung eines Sicherheitskissenmoduls (10) an einer mechanisch widerstandsfähigen Struktur (12) des Armaturenbretts, wobei die Baugruppe ein Sicherheitskissenmodul (10) und sein Befestigungsmittel (14) umfasst, wobei das Befestigungsmittel (14) einen ersten Teil (18), mit dem der Boden (102) eines Moduls (10) durch Klemmen verbunden ist, und einen zweiten Teil (20) umfasst, **dadurch gekennzeichnet, dass** der zweite Teil (20) des Befestigungsmittels (14) mindestens einen ersten Schenkel (201), der die Stütze für den Boden (102) des Moduls (10) bildet, und mindestens einen zweiten Schenkel (202), der die Stütze für eine Seitenwand (106, 107) des Moduls (10) bildet, umfasst.

2. Baugruppe nach dem vorhergehenden Anspruch, **dadurch gekennzeichnet, dass** der erste (201) und der zweite Schenkel (202) einen Winkel zwischen 70 und 110 Grad und vorzugsweise von 90 Grad bilden.

3. Baugruppe nach einem der vorhergehenden Ansprüche, **dadurch gekennzeichnet, dass** der erste (201) und/oder der zweite Schenkel (202) einen Buckel (24) umfasst, der in eine komplementär im Modul (10) ausgebildeten Aufnahme (26) eingeführt werden kann.

4. Baugruppe nach einem der vorhergehenden Ansprüche, **dadurch gekennzeichnet, dass** der erste (201) und/oder der zweite Schenkel (202) eine Aufnahme (26) umfasst, die geeignet ist, einen komplementär am Modul (10) ausgebildeten Buckel (24) aufzunehmen.

5. Baugruppe nach einem der vorhergehenden Ansprüche, **dadurch gekennzeichnet, dass** der Boden (102) des Moduls (10) über Verstärkungen (104) des Bodens (102) des Moduls (10) mit dem ersten Teil (201) des Befestigungsmittels (14) verbunden ist.
